# EUROPÄISCHE PATENTSCHRIFT

(11) **EP 4 101 678 B1**
(45) Veröffentlichungstag und Bekanntmachung des Hinweises auf die Patenterteilung: **02.10.2024**
(21) Anmeldenummer: 22170176.6
(22) Anmeldetag: 27.04.2022
(51) Int. Cl.: B60K 35/10, B60K 35/28, B60K 35/29, B60K 35/80, H04W 4/38

(54) **VERFAHREN UND SYSTEM ZUM BEDIENEN EINES NICHT-TRAGBAREN BENUTZERGERÄTS MITTELS EINES DISPLAYS UND/ODER EINER KAMERA EINES PORTABLEN HANDGERÄTS SOWIE EIN MIT DEM BENUTZERGERÄT KOPPELBARES HANDGERÄT**
METHOD AND SYSTEM FOR OPERATING A NON-PORTABLE USER DEVICE BY MEANS OF A DISPLAY AND / OR A CAMERA OF A PORTABLE HAND-HELD DEVICE AND A HANDHELD DEVICE COUPLED TO THE USER DEVICE
PROCÉDÉ ET SYSTÈME DE COMMANDE D'UN APPAREIL UTILISATEUR NON PORTATIF AU MOYEN D'UN AFFICHAGE ET/OU D'UNE CAMÉRA D'UN APPAREIL À MAIN PORTATIF, AINSI QU'APPAREIL À MAIN PORTATIF POUVANT ÊTRE COUPLÉ À L'APPAREIL UTILISATEUR

(30) Priorität: 11.06.2021 DE 102021115117
(43) Veröffentlichungstag der Anmeldung: 14.12.2022
(73) Patentinhaber: CARIAD SE, 38440 Wolfsburg (DE)
(72) Erfinder: LERZER, Jürgen, 92318 Neumarkt (DE)
(74) Vertreter: Hofstetter, Schurack & Partner

(56) Entgegenhaltungen:
- US-B1- 9 697 503

## Beschreibung

Die Erfindung betrifft ein Verfahren und ein System zum Betreiben eines nicht-tragbaren Benutzergeräts, das zumindest eine festverbaute Interaktionskomponente für Benutzerinteraktionen mit einem Benutzer aufweist. Das Benutzergerät kann z.B. eine Bedienkonsole eines Kraftfahrzeugs sein. Ein Beispiel für eine Interaktionskomponente ist ein Touchscreen (Berührungsbildschirm). Ein mit dem Benutzergerät temporär per Funk und/oder per Kabel koppelbares Handgerät kann ebenfalls für die Benutzerinteraktionen verwendet werden, wenn der Benutzer die korrespondierende festverbaute Interaktionskomponente z.B. aktuell nicht erreichen und/oder sehen kann. Das Handgerät kann z.B. ein Smartphone sein.

In einem Kraftfahrzeug gibt es mehrere Benutzereingabemöglichkeiten zur Steuerung des Cockpit-Systems oder Infotainment-Systems und damit der Fahrzeugfunktionen. Solche Benutzereingabemöglichkeiten sind z.B. die Touch-Eingabe über berührungsempfindliche Oberflächen/Displays und/oder eingebaute haptische Benutzereingabeelemente wie Tasten oder Drehknöpfe. Diese Benutzereingabemöglichkeiten, die in heutigen Fahrzeugen vorhanden sind, sind so angeordnet, dass sie bei normaler Fahrposition vom Fahrer oder Beifahrer durch einfaches Ausstrecken eines Arms erreicht werden können.

In der Regel sind diese Benutzereingabemöglichkeiten aber nicht erreichbar, wenn ein Fahrer z.B. in einen Relax-Modus geht (Fahrzeugsitz auf die hinterste Stellung und/oder in Liegeposition gestellt), während das Fahrzeug z.B. autonom fährt (wie z.B. bei autonomem Fahren Level 3 oder 4 z. B. gemäß SAE J3016). Die Benutzereingabemöglichkeiten sind dann oftmals weiter als eine Armlänge (z.B. weiter als 80 Zentimeter) von der Schulterposition entfernt. Gleiches gilt aber auch für andere Interaktionskomponenten, wie z.B. eine Kamera für eine Gesichtserkennung und/oder ein Display zum Anzeigen eines Anzeigeinhalts, weil z.B. in einer Liegeposition des Fahrzeugsitzes das Gesicht des Sitzinsassen nicht mehr auf sie gerichtet ist.

Als generelles Problem wurde erkannt, dass die Interaktionskomponenten nicht-tragbar sind, d.h. sie sind fest im Kraftfahrzeug verbaut und können vom Benutzer nicht in die Hand genommen werden, um sie auch bei geänderter Sitzposition, z.B. bei Liegestellung des Fahrzeugsitzes, direkt bedienen und/oder anschauen zu können.

Daher soll eine Lösung gefunden werden, die die Steuerung eines Benutzergeräts, wie des Cockpit/Infotainment-Systems, durch den Fahrer ermöglicht, wenn er sich z.B. während des autonomen Fahrens in einer Relax-Position des Fahrzeugsitzes befindet, also allgemein außerhalb der Reichweite einer Interaktionskomponente für Benutzereingaben.

Aber auch außerhalb eines Kraftfahrzeugs kann sich für ein anderes Benutzergerät eine ähnliche Bediensituation und damit dieselbe Problematik ergeben. Beispiele hierfür sind Hausgeräte, Unterhaltungsgeräte in Gebäuden (zum Beispiel ein Fernseher, der weit vom Sofa beabstandet steht).

Aus der EP 1 571 032 A1 ist eine Fernbedienung für ein Infotainmentsystem eines Kraftfahrzeugs bekannt. Die Fernbedienung kann einen Touchscreen aufweisen, auf dem eine grafische Bedienoberfläche einer Applikation mit grafischen Bedienelementen angezeigt wird. Die Fernbedienung ist über eine API (Application Programming Interface) mit dem Infotainmentsystem gekoppelt, sodass die Betätigung eines Bedienelements auf dem Touchscreen über die API eine entsprechende Funktion im Infotainmentsystem auslöst. Eine solche Lösung weißt den Nachteil auf, dass aufgrund der Kopplung über die API die Programmversionen im Infotainmentsystem einerseits und der lokal auf der Fernbedienung ausgeführten Applikation andererseits zueinander passen müssen. Ein Update nur im Infotainmentsystem kann dazu führen, dass die Fernbedienung nicht mehr über die API kommunizieren kann.

Aus der DE 10 2017 208 991 A1 ist ein Kraftfahrzeug mit einer Rückfahrkamera bekannt. Für den Fall, dass die Rückfahrkamera nicht funktionsfähig ist, kann ein Benutzer auch die Kamera seines Mobiltelefons verwenden. Der Datenstrom der Bilddaten dieser Kamera wird hierfür an das Kraftfahrzeug gesendet und dort anstelle des Datenstroms der funktionsuntüchtigen Rückfahrkamera verarbeitet. Eine Bedienung eines Infotainmentsystems ist hiermit für den Benutzer allerdings nicht ermöglicht.

Aus der EP 3 694 195 A1 ist bekannt, dass für die Bedienung eines Infotainmentsystems eines Kraftfahrzeugs auch eine Applikationssoftware auf einem Tablet-PC betrieben werden kann. Diese Applikationssoftware muss allerdings in der Lage sein, eine grafische Benutzerschnittstelle, GUI, selbstständig zu rendern, da lediglich die fertigen Steuerbefehle von dem Tablet-PC an das Infotainmentsystem gesendet werden können. Somit ist bei einer Anpassung der Software im Infotainmentsystem eine korrespondierende Anpassung in der Applikationssoftware notwendig, damit die Steuerbefehle weiterhin zu der Softwareversion im Infotainmentsystem passen.

Aus der US 9 697 503 ist ein Verfahren zum Betreiben eines nicht-tragbaren Benutzergeräts mit zumindest einer festverbauten Interaktionskomponente für Benutzerinteraktionen mit einem Benutzer bekannt, wobei in einem Direktbedienmodus des Benutzergeräts die Benutzerinterkationen umfassen, dass durch eine Prozessorschaltung eine jeweilige graphische Bedienoberfläche zumindest einer Softwareapplikation zu einer graphischen Nutzerschnittstelle, GUI, kombiniert und finale graphische Rohdaten der GUI an eine Interaktionskomponente zur Darstellung ausgegeben werden und/oder dass erfasste Rohdaten einer berührungslosen Benutzereingabe aus einer Interaktionskomponente empfangen und durch die Prozessorschaltung zu einer Gestenerkennung und/oder Benutzererkennung und/oder Videotelefonie übertragen werden.

Der Erfindung liegt das Problem zugrunde, für einen Benutzer zumindest eine Interaktionskomponente eines nicht-tragbaren Benutzergeräts auch dann bedienbar zu machen, wenn diese sich außerhalb der Reichweite des Benutzers befindet und/oder der Benutzer sich außerhalb von deren Erfassungsbereich für Benutzereingaben befindet.

Die Aufgabe wird durch die Gegenstände der unabhängigen Patentansprüche gelöst. Vorteilhafte Weiterbildungen sind durch die Unteranspräche, die folgende Beschreibung und die Figuren beschrieben.

Ein Aspekt der Lösung ist ein Verfahren zum Betreiben eines nicht-tragbaren Benutzergeräts mit zumindest einer festverbauten Interaktionskomponente für Benutzerinteraktionen mit einem Benutzer. Ein Benutzergerät ist insbesondere dann nicht-tragbar, wenn es dafür zu schwer ist, weil es beispielsweise mehr als 10 Kilogramm oder mehr als 20 Kilogramm wiegt und/oder weil es mit einem Objekt dieses Gewichts fest verbunden ist, beispielsweise verschraubt und/oder verklipst. Ein nicht-tragbares Benutzergerät kann beispielsweise ein Fernseher oder ein Infotainmentsystem oder eine Kombiinstrument in einem Kraftfahrzeug oder eine Schaltkonsole in einem Bedienleitstand sein. Die in dem Benutzergerät bereitgestellte zumindest eine Interaktionskomponente kann jeweils beispielsweise ein Bildschirm oder ein Touchscreen oder eine Kamera sein, um nur Beispiele zu nennen. Mit "fest verbaut" ist hierbei gemeint, dass die Interaktionskomponente schaltungstechnisch fest in dem Benutzergerät verschaltet ist, beispielsweise durch Kabel. Zudem kann fest verbaut zusätzlich oder alternativ meinen, dass die jeweilige Leistungskomponente fest verbunden ist, beispielsweise verschraubt und/oder verklebt. Mit anderen Worten muss sich der Benutzer bei diesem Benutzergerät an die Interaktionskomponente heran bewegen, also in einem vorbestimmten Bedienbereich vor der Interaktionskomponente aufhalten, um die jeweilige vorgesehene Benutzerinteraktion, beispielsweise das Betrachten eines Bildschirms und/oder das manuelle Bedienen einer Bedienoberfläche, durchführen zu können. Die Interaktionskomponente lässt sich nicht einfach in die Hand nehmen.

In einem Direktbedienmodus des Benutzergeräts umfasst die Benutzerinteraktionen, dass für das Anzeigen eines Anzeigeinhalts durch eine Prozessorschaltung aus einer jeweiligen graphische Bedienoberfläche (z.B. eines sogenanntes "Fensters" oder allgemein HMI - Human-Machine-Interface) zumindest einer Softwareapplikation / Softwareanwendung eine graphische Nutzerschnittstelle, GUI, gerendert oder erzeugt wird (z.B. als ein virtueller Desktop) und finale graphische Rohdaten dieser GUI werden an eine Interaktionskomponente , z.B. an einen Bildschirm oder ein Display, zur Darstellung ausgegeben. Zusätzlich oder alternativ werden im Rahmen einer Eingabe erfasste Rohdaten einer manuellen und/oder berührungslosen Benutzereingabe aus einer Interaktionskomponente empfangen und durch die Prozessorschaltung auf die Bedienoberfläche einer Softwareapplikation abgebildet und/oder zu einer Gestenerkennung und/oder Benutzererkennung und/oder Videotelefonie übertragen.

Die jeweilige Bedienoberfläche der zumindest einen Softwareapplikation der GUI kann jeweils beispielsweise in an sich bekannter Weise als sogenanntes Fenster (Window) und/oder als Bedienmenü ausgestaltet sein. Mehrere solcher Bedienoberflächen können auch kombiniert auf der GUI dargestellt werden, beispielsweise als teilweise überlappende (überlagernde) und/oder nebeneinander angeordnete Bedienoberflächen. Ein Betriebssystem der Prozessorschaltung kann die Grafikdaten, die von jeder Softwareapplikation zum Darstellen seiner jeweiligen Bedienoberfläche erzeugt werden, miteinander kombinieren, was auch als Rendern bezeichnet wird. Hierdurch entsteht das finale Erscheinungsbild der GUI, wie es sich momentan oder aktuell je nach Zustand der zumindest einen Softwareapplikation und/oder deren Bedienoberfläche ergibt. Dieses fertige Bild oder Erscheinungsbild der GUI wird durch die besagten finalen grafischen Rohdaten beschrieben. Sie können dann beispielsweise in einen Grafikspeicher eines Bildschirms oder Displays geschrieben oder kopiert werden, das dann als eine ausgebende oder darstellende Interaktionskomponente die Rohdaten anzeigt und somit dem Benutzer das Erscheinungsbild der GUI anzeigt. In den Rohdaten ist insbesondere nicht beschrieben, wo in dem Erscheinungsbild welche Bedienoberfläche von welcher Softwareapplikation angeordnet ist. Es handelt sich insbesondere um reine Pixeldaten eine Bild oder einer Bildfolge.

Für das Empfangen einer Benutzereingabe entstehen entsprechend an einer entsprechenden Interaktionskomponente ebenfalls zunächst nur Rohdaten, die un-interpretiert und/oder unabhängig von der zugehörigen Bedienoberfläche der zumindest einen Softwareapplikation empfangen werden. Die Prozessorschaltung muss dann diese eingegebenen oder erfassten Rohdaten, beispielsweise Berührungskoordinaten auf einem Touchpad, auf korrespondierende Positionen in der GUI abbilden, um zu erkennen, welche Bedienoberfläche (z.B. welches Fenster) von dem Benutzer mittels der Benutzereingabe eigentlich bedient wurde. Dieses Abbilden wird auch als Mapping von Rohdaten der Benutzereingabe auf die zumindest eine Softwareapplikation der GUI bezeichnet. Für eine Gestenerkennung und/oder Benutzererkennung und/oder Videotelefonie können die Rohdaten in einer Kamera entstehen. Hiermit kann der Benutzer als Benutzereingabe eine Bediengeste, beispielsweise eine Handbewegung und/oder eine Stellung einer Hand, und/oder das Freischalten einer Funktionalität durch Vorzeigen eines biometrischen Merkmals (z.B. des Gesichts) für eine Benutzererkennung erzeugen. Allgemein sind also die besagten Rohdaten für die Benutzerinterkation oder Bedienung noch nicht ausgewertete Daten, die also zunächst noch interpretiert oder abgebildet werden müssen, wenn es um die Benutzereingabe für eine spezifische Softwareapplikation geht, beziehungsweise ist bei den auszugebenden grafischen Rohdaten die Zuordnung nicht mehr vorhanden. Rohdaten können Pixelwerte und/oder Koordinatenwerte umfassen, um nur Beispiele zu nennen.

Um nun die Bedienbarkeit des Benutzergeräts auch für den Fall zu gewährleisten, wenn der Benutzer sich außerhalb der Reichweite der jeweiligen Interaktionskomponente befindet, betreibt das Benutzergerät eine Kommunikationsschnittstelle für einen Datenaustausch mit einem portablen Handgerät des Benutzers, welches jeweils eine zur jeweiligen Interaktionskomponente korrespondierende oder zugeordnete Ersatzkomponente aufweist. Die besagte Ersatzkomponente im Handgeräte weist insbesondere jeweils die korrespondiere Funktion der zugehörigen Interaktionskomponente auf, d.h. ein Bildschirm als Interaktionskomponente kann durch einen Touchscreen als Ersatzkomponente in dem Handgerät repräsentiert oder ersetzt werden.

Für einen Fernbedienmodus des Benutzergeräts tauschen eine Übertragungssoftware des Handgeräts einerseits und die Prozessorschaltung des Benutzergeräts andererseits Rohdaten der Eingabe und/oder Ausgabe über die Kommunikationsschnittstelle aus und die Übertragungssoftware des Handgeräts leitet diese Rohdaten zwischen der Kommunikationsschnittstelle und der jeweiligen Ersatzkomponente durch. Zwischen dem Benutzergerät einerseits und dem Handgerät des Benutzers andererseits wird also lediglich ein Rohdatenstrom ausgetauscht, der nicht dahingehend im Handgerät interpretiert werden muss, was den Bezug zu der zumindest einen Softwareapplikation und/oder zur Gestenerkennung und/oder Benutzererkennung und/oder Videotelefonie angeht. Ein portables Handgerät kann beispielsweise ein Smartphone des Benutzers sein, eine Ersatzkomponente z.B. ein Touchscreen und/oder eine Kamera. Die Übertragungssoftware koppelt also die jeweilige Ersatzkomponente mit der Kommunikationsschnittstelle, indem sie die Rohdaten durchleitet. Die Übertragungssoftware erkennt oder interpretierte z.B. nicht, wenn ein Menüeintrag auf einer Bedienoberfläche ausgewählt wird. Dies wird erst im Benutzergerät erkannt oder ausgewertet.

Diese Lösung weist den Vorteil auf, dass eine Softwareversion eines Betriebssystems der Prozessorschaltung und/oder der jeweiligen Softwareapplikation im Benutzergerät einerseits und die Softwareversion der Übertragungssoftware andererseits nur einen geringen Bedarf an gegenseitige Anpassung zueinander haben, da keine Steuerbefehle über eine API ausgetauscht werden müssen, sondern lediglich der Rohdatenstrom. Insbesondere wenn die Rohdaten unmittelbar von der jeweiligen Ersatzkomponente erzeugt oder verarbeitet und dann von der Übertragungssoftware bevorzugt unverändert durchgeleitet werden, wäre erst bei einem Austausch der Hardware der jeweiligen Ersatzkomponente eine Anpassung notwendig. Somit kann ein Softwareupdate im Benutzergerät durchgeführt werden, ohne dass hierdurch die Funktionsfähigkeit oder die Kommunikationsfähigkeit einer Kommunikationsschnittstelle mit der Übertragungssoftware verloren gehen würde, da letztere die Rohdaten ohnehin nicht interpretieren, sondern nur durchleiten muss.

Das Verfahren umfasst auch Weiterbildungen, durch die sich zusätzliche Vorteile ergeben.

Die besagte Kommunikationsschnittstelle ist bevorzugt eine Funkschnittstelle, wie sie beispielsweise mittels WIFI oder Bluetooth realisiert sein kann. Alternativ dazu kann die Kommunikationsschnittstelle auch eine kabelgebundene Übertragung der Rohdaten vorsehen, beispielsweise mittels des Standards USB (Universal Serial Bus).

Eine Weiterbildung sieht vor, dass ein Bildschirm des Benutzergeräts als Interaktionskomponente und ein Bildschirm des Handgeräts (z.B. ein Touchscreen) als korrespondierende Ersatzkomponente verwendet werden und über die Kommunikationsschnittstelle als graphische Rohdaten die fertig gerenderte graphische Nutzerschnittstelle, GUI, frei von Informationen über die Lage der Bedienoberfläche oder der einzelnen Bedienoberflächen an Übertragungssoftware gesendet werden. Somit werden als grafische Rohdaten lediglich Bilddaten an die Übertragungssoftware gesendet, welche diese grafischen Rohdaten als Bildinhalt oder Anzeigeinhalt auf der Ersatzkomponente darstellen kann, ohne dass in dem Handgerät Informationen über die Position der jeweiligen Benutzeroberfläche der zumindest einen Softwareapplikation vorhanden sind. D.h. in dem Handgerät erfolgt lediglich eine Ausgabe eines Videostroms oder Bilddatenstroms, der die GUI des Benutzergeräts repräsentiert oder darstellt oder anzeigt. Wird die GUI in Bezug beispielsweise der dargestellten Menüpunkte und/oder Schaltflächen (Buttons) durch ein Software-Update umgestaltet, so erfordert dies keine Anpassung der Übertragungssoftware, da diese weiterhin lediglich die finalen grafischen Rohdaten empfängt und mittels der Ersatzkomponente anzeigt.

Durch ein Betriebssystem des Benutzergeräts können auf der graphischen Nutzerschnittstelle dabei mehrere Bedienoberflächen mehrerer Softwareapplikationen zusammengefasst (kombiniert) darstellt werden. Die GUI zeigt also in den finalen grafischen Rohdaten ein Bild oder einen Anzeigeinhalt an, in welchem gleichzeitig mehrere Bedienoberflächen zu sehen oder dargestellt sind, beispielsweise als teilweise überlappende Fenster oder "Windows". In Abhängigkeit von einem Eingabefokus (d.h. seiner Positionierung durch die Benutzereingabe) kann jeweils eine davon die aktuelle Benutzereingabe empfangen. Diese Informationen, welche Benutzeroberfläche wo in der GUI angeordnet ist, liegen z.B. in einem übergeordneten Betriebssystem vor, da dieses die Bedienoberflächen der Softwareapplikationen zu der insgesamt dargestellten GUI kombiniert. Ein Softwaremodul, das diese Kombination mehrerer Bedienoberflächen oder Fenster durchführt, wird auch als Compositor oder Kompositionskomponente bezeichnet.

Für eine Benutzereingabe kann ein Berührungsbildschirm (Touchscreen) oder ein Touchpad (berührungssensitive Fläche ohne pixelbasierte Ausgabe) in dem Handgerät kann dazu genutzt werden, die manuelle Benutzereingabe für die GUI zu empfangen. Die Übertragungssoftware sendet z.B. erfasste Berührungskoordinaten der manuellen Benutzereingabe von dem Berührungsbildschirm des Handgeräts über die Kommunikationsschnittstelle an das Benutzergerät. Somit kann ein Benutzer an dem Handgerät eine manuelle Benutzereingabe, beispielsweise ein Antippen und/oder ein Streichen, eingeben und dies wird durch die Übertragungssoftware erfasst und an das Benutzergerät signalisiert. Somit ist der Touchscreen oder das Touchpad über die Kommunikationsschnittstelle mit dem Benutzergerät verbunden, ohne dass eine Interpretation Berührungskoordinaten in Bezug auf die GUI in dem Handgerät notwendig wäre.

Eine Weiterbildung sieht vor, dass das Handgerät seine räumliche Orientierung (z.B. Landscape oder Portrait) mittels zumindest eines eingebauten Sensors erkennt und seine erkannte Orientierung über die Kommunikationsschnittstelle an das Benutzergerät übermittelt oder signalisiert und das Benutzergerät eine Orientierung der Display-Ausgabe der GUI in Abhängigkeit von der signalisierten Orientierung aus dem Handgerät zur Laufzeit ändert oder anpasst. Beispiele für geeignete Sensoren sind jeweils ein Accelerometer oder eine IMU (Inertial Measurement Unit) und/oder ein Magnetometer. Durch Anpassen der Orientierung der GUI sind somit bei einem Drehen oder Kippen des Handgeräts dann die grafischen Rohdaten derart angepasst, dass Inhalte aus den Bedienoberflächen HMI der Softwareapplikationen korrekt orientiert bleiben (z.B. bleibt Text horizontal von links nach rechts orientiert angezeigt).

Eine Weiterbildung sieht vor, dass eine auf einen für den Direktbedienmodus vorgesehenen Aufenthaltsbereich des Benutzers ausgerichtete Kamera als Interaktionskomponente und eine Kamera des Handgeräts (z.B. eine Selfie-Kamera) als korrespondierende Ersatzkomponente vorgesehen werden und die von der Übertragungssoftware des Handgeräts bereitgestellten Bilddaten der Selfie-Kamera einer in dem Bediengerät betriebenen Erkennungsapplikation für die Gestenerkennung und/oder Benutzererkennung und/oder Videotelefonie übergeben werden. Wenn der Benutzer sich in dem Aufenthaltsbereich aufhält, erfasst ihn der Erfassungsbereich der Kamera des Benutzergeräts selbst, das heißt die Kamera kann Bilder des Benutzers erzeugen. Bewegt er sich aus dem Aufenthaltsbereich heraus, weil sich der Benutzer beispielsweise hinlegt oder seinen Fahrzeugsitz aus dem Aufenthaltsbereich heraus bewegt, so kann nun die Selfie-Kamera des Handgeräts genutzt werden, um eine Gestenerkennung und/oder Benutzererkennung und/oder Videotelefonie durchzuführen. Auch hier ist die Übertragungssoftware unabhängig von der Version des Betriebssystems und/oder der Gestenerkennung und/oder Benutzererkennung und/oder Videotelefonie des Benutzergeräts, da lediglich die Kamera-Bilddaten als Rohdaten übertragen werden, das heißt in dem Handgerät muss keine Bildverarbeitung und/oder grafische Aufbereitung und/oder Objekterkennung durchgeführt werden.

Eine Weiterbildung sieht vor, dass auch im Falle des Videostroms der Kamera das Handgerät seine räumliche Orientierung (also z.B. Landscape oder Portrait) mittels zumindest eines eingebauten Sensors der beschriebenen Art erkennt und seine Orientierung über die Kommunikationsschnittstelle an das Benutzergerät übermittelt oder signalisiert und das Benutzergerät eine Orientierung eines aus dem Handgerät empfangenen Videostroms für die Gestenerkennung und/oder Benutzererkennung und/oder Videotelefonie in Abhängigkeit von der signalisierten Orientierung aus dem Handgerät während der Laufzeit ändert oder anpasst. Der Gestenerkennung und/oder Benutzererkennung und/oder Videotelefonie wird somit auch bei einer Veränderung der Orientierung des Handgeräts durchgehend ein Videostrom mit gleichbleibender Orientierung bereitgestellt, beispielsweise bleibt der gefilmte Kopf des Benutzers stets aufrecht. Dies stellt auch bei einer Drehung des Handgeräts eine zuverlässige Erkennung sicher.

Eine Weiterbildung sieht vor, dass durch die Prozessorschaltung mittels eines Hypervisors zumindest zwei virtuelle Maschinen mit betrieben werden, wobei eine der virtuellen Maschinen als Systempartition die Kommunikationsschnittstelle betreibt und mit der Übertragungssoftware des Handgeräts die Rohdaten austauscht und zumindest eine andere der virtuellen Maschinen (Anwendungspartition) zumindest eine Softwareapplikation betreibt, welche aber dabei die Rohdaten nur indirekt über die Systempartition mit der Kommunikationsschnittstelle austauscht. Somit wird die Kommunikationsschnittstelle in einem übergeordneten Betriebssystem einer Systempartition ausgeführt, wobei "übergeordnet" meint, dass dort exklusiv die Kommunikation mit der Übertragungssoftware durchgeführt wird. Dies ergibt in vorteilhafter Weise in dieser Systempartition einen robusten und/oder sicheren Bereich für Software in dem Benutzergerät, der von keiner Softwareapplikation in einer anderen virtuellen Maschine beeinträchtigt werden kann, das die Systempartition die Hoheit über die Rohdaten hat. Die jeweilige Softwareapplikation kann dann in jeweils einer anderen virtuellen Maschine oder mehrere Softwareapplikationen können in einer oder mehreren virtuellen Maschinen, die sich jeweils von der Systempartition unterscheidet, ausgeführt werden. In der Systempartition kann also das beschriebene übergeordnete Betriebssystem betrieben werden, das die Rohdaten mit der Übertragungssoftware auf dem Handgerät austauscht und die Softwareapplikationen können dann von dieser Systempartition die Rohdaten einer Benutzereingabe empfangen. Zumindest eine Softwareapplikationen kann auch in der Systempartition betrieben werden (z.B. als sogenannten Systemapplikation). In der Systempartition kann auch die beschriebene GUI kombiniert oder gerendert werden, das heißt in der Systempartition kann der beschriebene Compositor oder die Kompositionskomponente betrieben werden, welche die grafischen Daten (Fensterinhalt oder Menüinhalt) der jeweiligen Bedienoberfläche zumindest einer Softwareapplikation empfängt und zu der GUI kombiniert. Diese finalen grafischen Rohdaten der GUI können dann von der Systempartition aus über die Kommunikationsschnittstelle an die Übertragungssoftware ausgegeben werden. Durch das Trennen des übergeordneten Betriebssystems in der Systempartition einerseits und der jeweiligen Softwareapplikation in einer virtuellen Maschine andererseits kann selbst bei einer Fehlfunktion einer Softwareapplikation ein durchgehender Betrieb in der Systempartition sichergestellt werden (z.B. der Betrieb einer Systemapplikation). Somit kann in der Systempartition eine Auswahl mehrerer Gerätefunktionen und/oder zumindest eine Gerätefunktion des Benutzergeräts zuverlässig betrieben werden, unbeeinflusst von einem Funktionsfehler in der zumindest einen Softwareapplikation der zumindest eine Anwendungspartition.

Im Falle einer Kamera kann diese auch direkt an die Infotainment-Partition / Anwendungspartition angebunden sein, wobei diese dann die Kommunikationsschnittstelle für die Kamera betreibt. Damit kann eine Performanzeinbuße verhindert werden, wenn eine kamerabasierte Softwareapplikation auf der Anwendungspartition betrieben wird.

Ein weiterer Aspekt der Lösung ist ein System umfassend ein Benutzergerät mit der zumindest einen festverbauten Interaktionskomponente und ein Handgerät mit einer Übertragungssoftware. Das System stellt die beschriebenen Elemente für das Ausführen des Verfahrens bereit, das heißt ein Benutzergerät einerseits und ein Handgerät mit der beschriebenen Übertragungssoftware andererseits. Das System ist insgesamt dazu eingerichtet, eine Ausführungsform des erfindungsgemäßen Verfahrens durchzuführen.

Das Benutzergerät dieses Systems stellt ebenfalls einen Aspekt der Erfindung dar und weist die zumindest eine festverbaute Interaktionskomponente für Benutzerinteraktionen mit dem Benutzer aufweist und eine Prozessorschaltung des Benutzergeräts ist dazu eingerichtet, dass in einem Direktbedienmodus des Benutzergeräts die Benutzerinteraktionen umfassen, dass durch eine Prozessorschaltung graphische Bedienoberflächen zumindest einer Softwareapplikation zu einer graphischen Nutzerschnittstelle, GUI, kombiniert und als finale graphische Rohdaten der GUI an eine Interaktionskomponente zur Darstellung ausgegeben werden und/oder dass erfasste Rohdaten einer berührungslosen Benutzereingabe aus einer Interaktionskomponente empfangen und durch die Prozessorschaltung auf eine der Bedienoberflächen abgebildet und/oder zu einer Gestenerkennung und/oder Benutzererkennung und/oder Videotelefonie übertragen werden. Entsprechend dem beschriebenen Verfahren ist die Prozessorschaltung des Benutzergeräts dazu eingerichtet, dass das Benutzergerät eine Kommunikationsschnittstelle für einen Datenaustausch mit dem portablen Handgerät des Benutzers betreibt, welches insbesondere jeweils eine zur Interaktionskomponente korrespondierende Ersatzkomponente aufweist. Das Benutzergerät sieht einen Fernbedienmodus des Benutzergeräts vor, in welchem eine Übertragungssoftware des Handgeräts einerseits und die Prozessorschaltung des Benutzergeräts andererseits die Rohdaten über die Kommunikationsschnittstelle austauschen und die Übertragungssoftware des Handgeräts die Rohdaten zwischen der Kommunikationsschnittstelle und der jeweiligen Ersatzkomponente durchleitet. Wie bereits ausgeführt, kann es sich bei einer Interaktionskomponente beispielsweise um einen Bildschirm, einen Touchscreen, ein Touchpad, eine Kamera für eine Gestenerkennung, eine Kamera für eine Benutzererkennung handeln. Eine entsprechende Ersatzkomponente kann dann bei einem Bildschirm ebenfalls ein Bildschirm (insbesondere Touchscreen), bei einem Touchscreen oder Touchpad ein entsprechender Touchscreen oder Touchpad und bei einer Kamera ebenfalls eine Kamera, insbesondere die Selfie-Kamera eines Smartphones und/oder Tablet-PCs sein. Eine Softwareapplikation kann als Bedienoberfläche in der beschriebenen Weise ein sogenanntes Fenster und/oder ein Bedienmenü berechnen oder erzeugen (allgemein ein HMI), wie es an sich für Softwareapplikationen aus dem Stand der Technik bekannt ist. Die grafischen Rohdaten der GUI repräsentieren die finalen kombinierten grafischen Benutzeroberflächen oder die grafische Ausgabe einer Benutzeroberfläche einer Softwareapplikation (falls nur eine sichtbar ist). Erfasste Rohdaten können insbesondere Bilddaten umfassen. Der Benutzer kann also im Direktbedienmodus an einer fest verbauten Interaktionskomponente des Benutzergeräts eine Benutzerinteraktion durchführen und im Fernbedienmodus diese Benutzerinteraktion an einer jeweiligen Ersatzkomponente am portablen Handgerät ausführen.

Die Prozessorschaltung eines solchen Benutzergeräts kann für das Betriebssystem (hier auch als übergeordnetes Betriebssystem bezeichnet) zum Betreiben der Kommunikationsschnittstelle eine virtuelle Maschine als Systempartition betreiben und die zumindest eine Softwareapplikation auf einer oder mehreren weiteren virtuellen Maschinen betreiben, also jeweils einer von der Systempartition verschiedenen Anwendungspartition oder als Gästepartition. Zumindest eine Softwareapplikation kann von der Systempartition betrieben werden (Systemapplikation).

Eine Weiterbildung sieht vor, dass das Benutzergerät als eine Bedienkonsole eines Kraftfahrzeugs ausgestaltet ist. Denn insbesondere in einem Kraftfahrzeug kann sich der Anwendungsfalls ergeben, dass ein Fahrzeuginsasse, insbesondere ein Fahrer, einen Fahrzeugsitz in eine Liegeposition und/oder eine Komfortposition einstellt oder verfährt, wodurch sich aber ein Abstand zu der zumindest einen Interaktionskomponente der Bedienkonsole ergibt, der größer ist als eine Armlängen und/oder eine Ausrichtung des Körpers des Fahrzeuginsassen verhindert ein Erreichen der jeweiligen Interaktionskomponente beziehungsweise ein Betrachten derselben. Hier kann der Benutzer dann auf sein portables Handgerät zum Bedienen des Bediengeräts zurückgreifen. Die Bedienkonsole kann beispielsweise ein Infotainmentsystem und/oder ein Kombiinstrument und/oder ein Armaturenbrett und/oder Cockpitsystem des Kraftfahrzeugs umfassen.

Ein weiterer Aspekt der Lösung ist ein Kraftfahrzeug mit einer Ausführungsform des besagten Benutzergeräts. Das erfindungsgemäße Kraftfahrzeug ist bevorzugt als Kraftwagen, insbesondere als Personenkraftwagen oder Lastkraftwagen, oder als Personenbus oder Motorrad ausgestaltet. Das Kraftfahrzeug kann somit direkt über die zumindest einen fest verbauten Interaktionskomponente des Benutzergeräts bedient werden und der Benutzer kann zusätzlich mittels eines portablen Handgeräts Benutzerinteraktionen für das Benutzergerät ausführen.

Ein weiterer Aspekt der Lösung ist eine Übertragungssoftware für ein portables Handgerät eines Benutzers, d.h. die Übertragungssoftware umfasst maschinenlesbare Instruktionen, die dazu eingerichtet sind, bei Ausführen durch eine Prozessorschalung des Handgeräts die das Handgerät betreffenden Schritte gemäß einer Ausführungsform des beschriebenen Verfahrens auszuführen. Durch die Übertragungssoftware wird ein portables Handgerät ertüchtigt, eine Komponente des beschriebenen erfindungsgemäßen Systems darzustellen oder zu ergeben. Das Handgerät kann insbesondere als Smartphone oder Smartwatch oder Tablet-PC ausgestaltet sein, um nur Beispiele für geeignete Handgeräte zu nennen. Eine andere Bezeichnung für dies Art von Handgerät ist auch CE Device (CE - Consumer Electronics). Die Übertragungssoftware kann also sogenannte App bereitgestellt werden, z.B. in einem sogenannten App-Store.

Die beschriebene jeweilige Prozessorschaltung (im Benutzergerät und/oder im Handgerät) kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessorschaltung Programmcode aufweisen, der dazu eingerichtet ist, bei Ausführen durch die Prozessoreinrichtung die jeweils vorgesehenen Schritte einer Ausführungsform des Verfahrens durchzuführen. Der Programmcode kann in einem Datenspeicher der Prozessorschaltung gespeichert sein.

Zu der Erfindung gehören auch Weiterbildungen des erfindungsgemäßen Systems und der Bediengeräts und der Übertragungssoftware, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen hier nicht noch einmal beschrieben.

Im Folgenden sind Ausführungsbeispiele der Erfindung beschrieben. Hierzu zeigt:
- Fig. 1: eine schematische Darstellung einer Ausführungsform des erfindungsgemäßen Kraftfahrzeugs mit einer Ausführungsform des erfindungsgemäßen Systems;
- Fig. 2: eine schematische Darstellung einer weiteren Ausführungsform des erfindungsgemäßen Kraftfahrzeugs mit einer weiteren Ausführungsform des erfindungsgemäßen Systems; und
- Fig. 3: eine schematische Darstellung einer weiteren Ausführungsform des erfindungsgemäßen Kraftfahrzeugs mit einer weiteren Ausführungsform des erfindungsgemäßen Systems.

Bei den im Folgenden erläuterten Ausführungsbeispielen handelt es sich um bevorzugte Ausführungsformen der Erfindung.

In den Figuren bezeichnen gleiche Bezugszeichen jeweils funktionsgleiche Elemente.

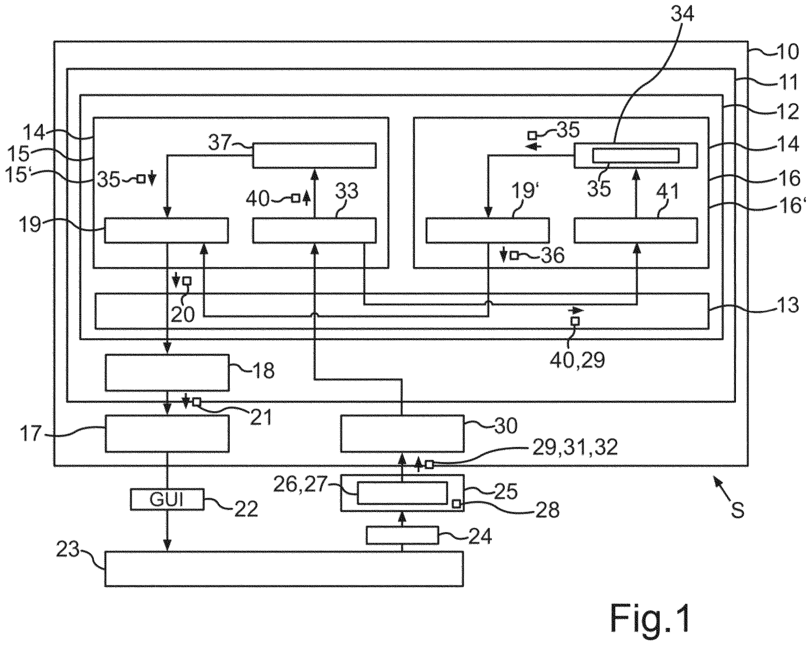

Fig. 1 zeigt ein Kraftfahrzeug 10, bei dem es sich um einen Kraftwagen, insbesondere einen Personenkraftwagen oder Lastkraftwagen, handeln kann. Dem Kraftfahrzeug 10 kann als ein nicht-tragbares Benutzergerät 11 eine Bedienkonsole bereitgestellt sein, die insbesondere ein Cockpitsystem und/oder ein Infotainmentsystem und/oder ein Kombiinstrument umfassen kann. In dem Benutzergerät 11 kann eine Prozessorschaltung 12 bereitgestellt sein, die zumindest einen Mikroprozessor mit jeweils zumindest einem Prozessorkern aufweisen kann. Für einen Programmcode oder Programminstruktionen kann die Prozessorschaltung 12 einen Datenspeicher aufweisen, beispielsweise einen Flash-Speicher und/oder ein Solid State Device SSD. Die Prozessorschaltung 12 kann einen Rechenknoten des Benutzergeräts 11 darstellen. In der Prozessorschaltung 12 können mittels eines Virtual Machine Managers VMM oder Hypervisors 13 mehrere Betriebssystempartitionen oder Softwarepartitionen 14 betrieben werden, wobei eine der Softwarepartitionen 14 eine Systempartition 15 und die zumindest eine weitere Softwarepartition 14 eine jeweilige Anwendungspartition 16 darstellen kann. In der Systempartition 15 kann ein Betriebssystem 16 betrieben werden, das ein übergeordnetes Betriebssystem 16 darstellen kann, da durch dieses Betriebssystem 16 zumindest eine Interaktionskomponente 17, beispielsweise zumindest ein Bildschirm betrieben werden kann, wozu die Prozessorschaltung 12 mit der Interaktionskomponente 17 mittels einer Grafikschnittstelle 18, beispielsweise einer Grafikkarte mit Graphikspeicher, gekoppelt sein kann. Eine softwarebasierte Kompositionskomponente 19 kann grafische Rohdaten 20 erzeugen, mit denen die Grafikschnittstelle 18 angesteuert werden kann, um aus den grafischen Rohdaten 20 elektrische Signale 21 zum Steuern der Interaktionskomponente 17 zu erzeugen, die daraufhin in Abhängigkeit von den grafischen Rohdaten 20 einen Anzeigeinhalt 22 einem Benutzer 23 anzeigt, der beispielsweise ein Fahrzeuginsasse, insbesondere der Fahrer, sein kann. Der Anzeigeinhalt 22 kann eine grafische Benutzerschnittstelle GUI sein, der die Bedienoberflächen mehrerer Softwareapplikationen in Kombination zeigen kann. Die Interaktionskomponente 17 kann ein Touchscreen sein, über welchen auch eine manuelle Benutzereingabe des Benutzers 23 empfangen werden kann, wenn sich der Touchscreen in Reichweite des Benutzer 23 befindet. Diese stellt einen Direktbedienmodus für das Benutzergerät dar.

Eine Benutzereingabe 24 des Benutzers 23 kann aber in einem Fernbedienmoduls auch durch ein tragbares Handgerät 25, beispielsweise einem Smartphone, auf einem Touchscreen 26 des Handgeräts 25 empfangen werden. Der Fernbedienmodus kann dauerhaft aktiv sein oder mit einem Koppelvorgang (sogenanntes Pairing) des Handgeräts 25 aktiviert werden oder benutzergesteuert aktiviert werden. Der Touchscreen 26 und/oder eine Hardwarekomponente des Handgeräts 25 allgemein, die die Benutzereingabe 24 empfängt, kann als Ersatzkomponente 27 für eine korrespondierende Interaktionskomponente des Benutzergeräts 11 betrieben werden. Hierzu kann in dem Handgerät 25 eine Übertragungssoftware 28 betrieben werden, welche die von der Ersatzkomponente 27 in Abhängigkeit von der Benutzereingabe 24 erzeugten Rohdaten, das heißt diejenigen digitalen Signale, die von der Ersatzkomponente 27 bei Ausführen der Benutzereingabe 24 erzeugt werden, als Rohdaten 29 an eine Kommunikationsschnittstelle 30 des Benutzergeräts 11 übertragen, ohne das in der Übertragungssoftware 28 bekannt sein müsste, welche Funktion durch die Benutzereingabe 24 bedient oder ausgelöst wird.

Insgesamt ergeben das Benutzergerät 11 und das Handgerät 25 ein System S, wie es bereits beschrieben wurde.

Das Benutzergerät 11 kann als Kommunikationsschnittstelle 30 beispielsweise ein Konnektivitätsmodem oder einen Empfänger für ein Funksignal betreiben. Die Kommunikationsschnittstelle 30 kann hierzu beispielsweise auf dem Standard WIFI oder Bluetooth basieren. Eine kabelgebundene Kommunikationsschnittstelle kann beispielsweise auf der Grundlage von USB realisiert werden. Die Rohdaten 29 können beispielsweise Koordinaten 31 beschreiben, die angeben, wo auf dem Touchscreen 26 des Handgeräts 25 der Benutzer 23 eine Berührung und/oder eine Wischgeste als Benutzereingabe 24 ausgeführt hat. Ist die Ersatzkomponente 27 eine Kamera, welche ein Gesicht und/oder eine Hand des Benutzers 23 erfasst, so kann als Rohdaten 29 ein Datenstrom aus Bilddaten 32 der Kamerabilder an die Kommunikationsschnittstelle 30 übertragen werden.

Die jeweilige Softwarepartition 14, also die Systempartition 15 und die zumindest eine Anwendungspartition 16, repräsentiert jeweils auch ein jeweiliges Betriebssystem, nämlich ein übergeordnetes Betriebssystem 15', und ein Anwendungsbetriebssystem 16', das in der jeweiligen Softwarepartition 14 betrieben wird. In der Systempartition 15 kann entsprechend ein übergeordnetes Betriebssystem 15' betrieben werden, das unabhängig von dem jeweiligen Anwendungsbetriebssystem 16' der jeweiligen Anwendungspartition 16, insbesondere auch bei einer Funktionsstörung einer Anwendungspartition 16 oder einer darin betriebenen Softwareapplikation 34, weiterbetrieben werden kann. Entsprechend kann eine jeweilige Systemapplikation 37 eine Funktionalität oder Gerätefunktion des Benutzergeräts 11 bereitstellen, die robuster oder zuverlässiger läuft als eine Softwareapplikation 34 in der Anwendungspartition.

Sowohl die Systemapplikation als auch die Anwendungssoftware 34 können eine Softwareapplikation im Sinne der vorliegenden Beschreibung darstellen. Eine Systemapplikation 37 ist eine Softwareapplikation in der Systempartition 15. Beispiele für eine Systemapplikation 37 können sein: eine Bedienoberfläche für die Klimaanlage, ein Tachomat, eine Bedienoberfläche für den Tempomaten eines Kraftfahrzeugs, eine Passworteingabe-Bedienoberfläche. Beispiele für eine Softwareapplikation in einer Anwendungspartition sind des Weiteren jeweils eine Medienwiedergabe (Radio, Blueray-Player), Telefonie, Internet-Browsing.

Innerhalb der Systempartition 15 kann eine Empfangskomponente 33 als Software betrieben werden, welche die Rohdaten 29 dem übergeordneten Betriebssystem 15' und/oder der zumindest einen Softwareapplikation 34 bereitstellt. Eine solche Softwareapplikation 34 kann als Anwendung in einer virtuellen Maschine einer Anwendungspartition 16 betrieben werden. In der jeweiligen Anwendungspartition 16 kann ein unabhängiges Betriebssystem (Anwendungsbetriebssystem 16') eine grafische Ausgabekomponente 19' für das Erzeugen des Anzeigeinhalte 22 Grafikdaten 36 einer jeweiligen Bedienoberfläche 35 der jeweiligen Softwareapplikation 34 an die Kompositionskomponente 19 aussenden. Aus Sicht der Kompositionskomponente 19 stellen die Grafikdaten 36 aus einer Softwareapplikation 16 insgesamt eine einzelne Bedienoberfläche dar, die aber innerhalb der jeweiligen Anwendungspartition 16 wiederum aus einer oder mehreren in der Anwendungspartition 16 betriebener Softwareapplikationen 34 zusammengesetzt sein kann.

Eine Besonderheit dieser Systemarchitektur oder kurz Architektur liegt darin, dass ein Hypervisor 13 vom Typ 1 betrieben werden kann und dennoch alle Benutzereingaben 24 und alle Anzeigeinhalte 22 von einer der mehreren Softwarepartitionen 14 empfangen beziehungsweise ausgegeben werden, nämlich der Systempartition 15. Dies erfordert es zusätzlich, dass eine Kommunikation zwischen der Systempartition 15 einerseits und jeder Anwendungspartition 16 andererseits erfolgt, was, wie in Fig. 1 symbolisch dargestellt, über den Hypervisor 13 erfolgen kann, der hierzu aber in besonderer Weise erweitert werden muss. Beispielsweise kann durch sogenannten geteilten Speicher (Shared Memory) ein Eingabeereignis von der Systempartition 15 auf die Anwendungspartition 16 übertragen oder signalisiert werden und anders herum Grafikdaten 36 aus der Anwendungspartition 16 über Shared Memory in die Systempartition 15 übertragen werden.

Die Empfangskomponente 33 kann die Rohdaten 29 an die Systemapplikation 37 und/oder an die Anwendungspartition 16 jeweils als Eingabedaten 40 leiten. In der jeweiligen Anwendungspartition 16 kann durch das Anwendungssystem 16' eine betriebssystemeigene Empfangskomponente 41 betrieben werden, welche die empfangenen Eingabedaten 40 der Empfangskomponente 33, insbesondere in Form von Rohdaten 29, auf die jeweilige Bedienoberfläche 35 der jeweiligen Softwareapplikation 34 abbilden oder zuordnen kann. Insgesamt kann hierdurch ein Eingabefokus zwischen Softwareapplikationen durch eine manuelle Benutzereingabe am Handgeräte verschoben werden und innerhalb einer jeweiligen Softwareapplikation mittels Eingabefokus zumindest eine Softwarefunktion vom Benutzer 23 ausgewählt und/oder gesteuert werden.

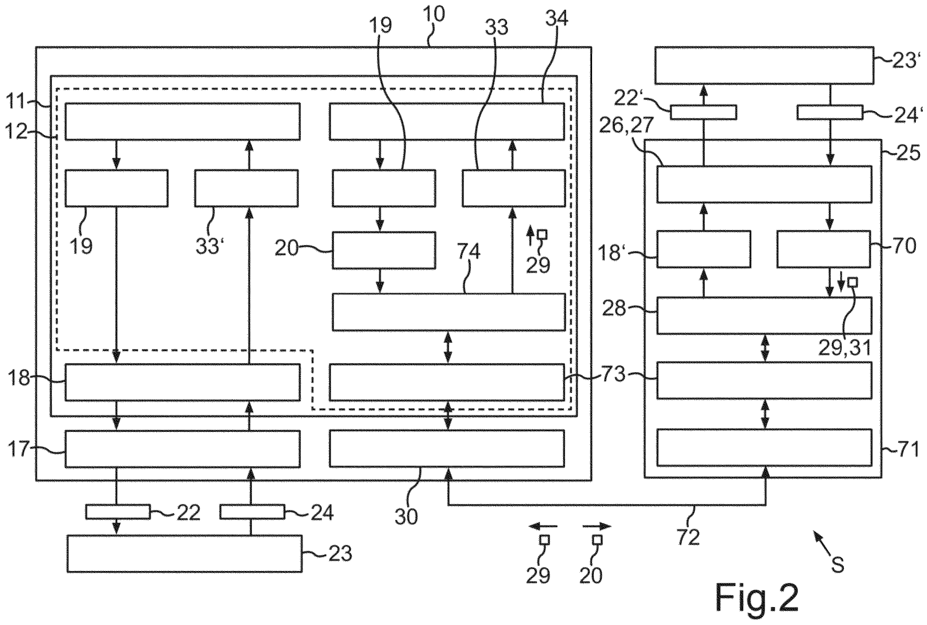

Fig. 2 veranschaulicht eine Ausführungsform, bei welcher dem Kraftfahrzeug 10 das Benutzergerät 11 sowohl mittels einer Kompositionskomponente 19 mit geräteinternen Interaktionskomponenten in Form eines festverbauten Displays oder Bildschirms 17 mit gerätegebundener Toucheingabe für eine Empfangskomponente 33' in der beschriebenen Weise gekoppelt ist als auch über die Kommunikationsschnittstelle 30 eine Ersatzkomponente 26 in Form eines Touchscreens 27 für einen Anzeigeinhalt 22' an einen zweiten Benutzer 23' vorgesehen sein kann. Der zweite Benutzer 23' kann sich von dem Benutzer 23 unterscheiden. Beispielsweise kann der Nutzer 23 ein Fahrer sein, während der Benutzer 23' ein Fahrgast oder Passagier sein kann. Entsprechend kann es auch eine zweite Benutzereingabe 24' vom zweiten Benutzer 23' an der Ersatzkomponente 26 in Form des Touchscreens 27 im Handgericht 25 geben. Über eine Erfassungsschaltung 70 für das Touchscreen 27 kann die zweite Benutzereingabe 24' empfangen werden und die sich ergebenden Rohdaten 29 in Form von beispielsweise Berührungskoordinaten oder Koordinaten 31 können über die Übertragungssoftware 28 zu der Kommunikationsschnittstelle 30 übertragen werden. Fig. 2 veranschaulicht hierzu beispielhaft, wie dies über eine Schnittstellenschaltung 71 erfolgen kann, die beispielsweise einen Bluetooth-Transceiver und/oder WIFI-Transceiver und/oder eine USB-Schnittstelle umfassen kann. Die sich ergebende Kommunikationsverbindung 72 kann beispielsweise über einen sogenannten IP-Stack 73 betrieben werden, wie er aus dem sogenannten ISO-OSI-Übertragungsmodell bekannt ist. Innerhalb der Prozessorschaltung 12 des Benutzergeräts 10 kann dann eine Softwareapplikation 34 über ein Kommunikationsmodul 74 mit dem Handgerät 25 kommunizieren, wobei das Kommunikationsmodul 74 das Kompositionsmodul 19 und das Empfangskomponente 33 nachbilden oder ersetzen kann, mit den Rohdaten 29 versorgen beziehungsweise die Rohdaten 29 für den Anzeigeninhalt 22' entgegennehmen kann. Somit geht über die Kommunikationsverbindung 27 lediglich ein Datenstrom aus Rohdaten 29, 20, die sich in ihrem Format nicht ändern müssen, selbst wenn ein Softwareupdate in der Softwareapplikation 34 und/oder der Übertragungssoftware 28 stattfindet.

Im Fahrzeug befinden sich somit ein oder mehrere eingebaute Displays 17, 17' zur Darstellung der Benutzeroberfläche des Cockpit/Infotainment-Systems (auch Cockpit/IVI-System genannt, IVI - in vehicle infotainment). Üblicherweise ist mindestens eines dieser Displays ein Touch-Display, über das der Benutzer das Cockpit/Infotainment-System und damit auch Fahrzeugfunktionen steuern kann. Das Problem ist nun, dass in den meisten Fahrzeugen nicht alle der eingebauten Displays ideal, vollständig oder überhaupt von allen Sitzpositionen im Fahrzeug aus zu sehen sind, z.B. vom Beifahrer- oder Fondbeifahrersitz, da in den meisten Autos Beifahrer- oder Fonddisplays fehlen und die eingebauten Displays fahrerzentriert realisiert sind.

Andererseits, wenn ein Fahrzeug mit Beifahrer- und/oder Rücksitz-Displays ausgestattet ist, sind diese Displays wahrscheinlich die meiste Zeit ungenutzt, da das Fahrzeug die meiste Zeit nicht voll besetzt ist und die Displays daher nicht genutzt werden. Darüber hinaus sind temporäre Anwendungsfälle denkbar, bei denen z.B. ein Beifahrer die Verkehrsumgebung hinter dem Fahrzeug überwachen möchte, beim Fahren mit einem Fahranfänger z.B. während einer Phase des begleiteten Fahrens, die temporär ein zusätzliches Display zu den eingebauten fahrerzentrierten Anzeigen erfordert. In solchen Fällen würde die temporäre Erweiterung der Display-Ausgabe des Cockpit/Infotainment-Systems auf zusätzliche Displays, die von den Fahrgästen mitgebracht werden, helfen und temporäre Beifahrer-/Rücksitz-Anwendungsfälle unterstützen, ohne dass die eingebauten Displays benötigt werden.

Zusammenfassend besteht das hier zu lösende Problem darin, eine Lösung zu finden, die es ermöglicht, die Ausgabe und Eingabe vom/zum Cockpit/Infotainment-System zu erweitern, indem CE-Geräte, die von dem/den Benutzer(n) in das Fahrzeug mitgebracht werden, als zusätzliche drahtlose Beifahrer- bzw. Fondbeifahrer-Displays verwendet werden, die von den verschiedenen Passagieren anstelle der eingebauten Displays genutzt werden können.

Ein nachteiliger Ansatz bei der Nutzung von CE-Geräten / Handgeräten 25 ist ein BYOD (Bring Your Own Device)-Anwendungsfall, bei dem ein vom Benutzer 25' mitgebrachtes CE-Gerät eine oder mehrere spezifische Anwendung(en) enthält, die eine oder mehrere spezifische, vom Cockpit/Infotainment-System bzw. dem Fahrzeug bereitgestellte API zur Steuerung von Cockpit/Infotainment-System- bzw. Fahrzeugfunktionen oder zur Darstellung bestimmter Inhalte auf einem CE-Gerät nutzen. Die Nachteile dieses Ansatzes sind, dass die Anwendung des CE-Geräts immer zu den Versionen der APIs passen muss, die vom Fahrzeug bereitgestellt werden. Updates, insbesondere Funktionserweiterungen, innerhalb des Fahrzeugs können nicht direkt auf dem CE-Gerät genutzt werden, da zunächst die Applikation des CE-Geräts ein Update erhalten muss, das das Update bzw. die Funktionserweiterung unterstützt.

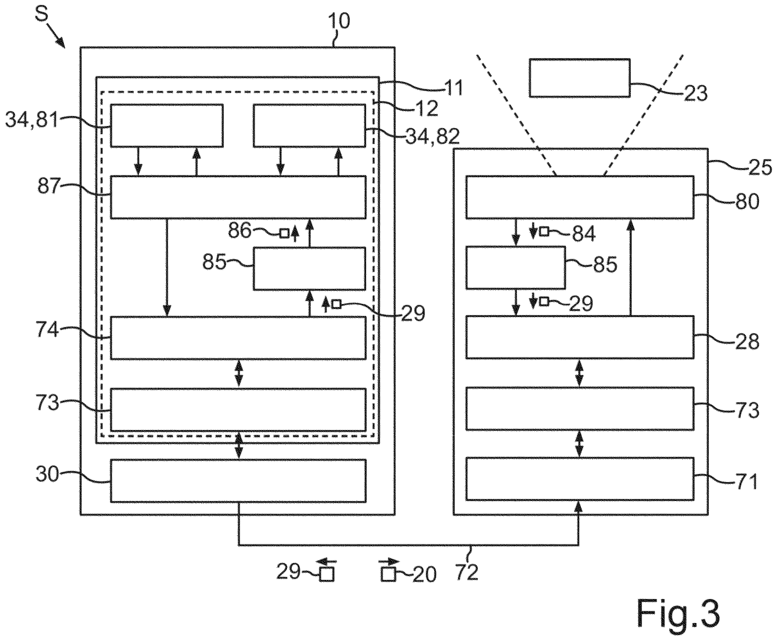

Fig. 3 veranschaulicht, wie eine Kamera 80 dafür genutzt werden kann, eine Softwareapplikation 34, die eine Benutzererkennung 81 ausführt, und/oder eine Softwareapplikation 34, die eine Gestenerkennung 82 und/oder Videotelefonie ausführt, mit Rohdaten 29 aus der Kamera 80 zu versorgen. Die Softwareapplikationen 34 können dabei in dem Benutzergerät 11 des Kraftfahrzeugs 10 auf der Prozessorschaltung 12 ausgeführt werden. Die Kamera 80 kann in einem Handgerät 25 bereitgestellt sein und beispielsweise dies Selfie-Kamera des Handgerät 25, also beispielsweise eines Selfie-Kamera eines Smartphones, sein. Die Kamera 80 kann ein Gesicht und/oder eine Handgeste eines Benutzers 23 erfassen und die Bilddaten 84 der Kamera 80 können beispielsweise durch einen Codec 85 in erfasste Rohdaten 29 umgewandelt werden, die mittels der Übertragungssoftware 28 beispielsweise in der im Zusammenhang mit Figur 3 beschriebenen Weise über einen Stack 73 und eine Kommunikationsschaltung 71 über eine Kommunikationsverbindung 72 an die Kombinationsschnittstelle 30 in dem Benutzergerät 11 übertragen werden. Bei der Verwendung eines Stacks 73 kann auch dieser Stack ebenfalls in der Prozessorschaltung 12 implementiert sein. Die Rohdaten 29 können in an sich bekannter Weise mittels eines Codec 35 in der Prozessorschaltung 12 wieder in Bilddaten 86 decodiert werden und dann mittels eines Kamera-Framework 87 an die Softwareapplikationen 34 für die Gestenerkennung 81 und/oder die Benutzerkennung 82 übertragen oder übergeben werden.

Das Kamera-Framework 87 kann eine sogenannte HAL (Hardware Abstraction Layer) für die Softwareapplikationen 34 darstellen, wie es an sich aus dem Stand der Technik bekannt ist.

Insgesamt zeigen die Beispiele, wie ein Smartphone als erweiterte Bedienschnittstelle für das Infotainmentsystem eines Kraftfahrzeugs eingebunden werden kann.

## Patentansprüche

1. Verfahren zum Betreiben eines nicht-tragbaren Benutzergeräts (11) mit zumindest einer festverbauten Interaktionskomponente (17) für Benutzerinteraktionen mit einem Benutzer (23), wobei in einem Direktbedienmodus des Benutzergeräts (11) die Benutzerinterkationen umfassen, dass durch eine Prozessorschaltung (12) eine jeweilige graphische Bedienoberfläche (35, 52, 53) zumindest einer Softwareapplikation (34) zu einer graphischen Nutzerschnittstelle, GUI (22), kombiniert und finale graphische Rohdaten der GUI (22) an eine Interaktionskomponente (17) zur Darstellung ausgegeben werden und/oder dass erfasste Rohdaten (29) einer berührungslosen Benutzereingabe (24) aus einer Interaktionskomponente (17) empfangen und durch die Prozessorschaltung (12) zu einer Gestenerkennung und/oder Benutzererkennung und/oder Videotelefonie übertragen werden, **dadurch gekennzeichnet, dass**
das Benutzergerät (11) eine Kommunikationsschnittstelle (30) für einen Datenaustausch mit einem portablen Handgerät (25) des Benutzers (23) betreibt, welches zumindest eine der jeweiligen Interaktionskomponente (17) zugeordnete Ersatzkomponente (27) aufweist, und
in einem Fernbedienmodus des Benutzergeräts (11) eine Übertragungssoftware (28) des Handgeräts (25) einerseits und die Prozessorschaltung (12) des Benutzergeräts (11) andererseits die Rohdaten über die Kommunikationsschnittstelle (30) austauschen und die Übertragungssoftware (28) des Handgeräts (25) die Rohdaten zwischen der Kommunikationsschnittstelle (30) und der jeweiligen Ersatzkomponente (27) durchleitet.

2. Verfahren nach Anspruch 1, wobei eine Interaktionskomponente (17) ein Bildschirm des Benutzergeräts (11) und die zugeordnete Ersatzkomponente (27) ein Bildschirm des Handgeräts (25) ist und als graphische Rohdaten die fertig gerenderte graphische Nutzerschnittstelle, GUI, über die Kommunikationsschnittstelle (30) an die Übertragungssoftware (28) gesendet werden.

3. Verfahren nach Anspruch 2, wobei das Handgerät seine räumliche Orientierung mittels zumindest eines eingebauten Sensors erkennt und seine Orientierung über die Kommunikationsschnittstelle an das Benutzergerät signalisiert und das Benutzergerät eine Orientierung der Bildausgabe der GUI in Abhängigkeit von der signalisierten Orientierung aus dem Handgerät zur Laufzeit anpasst.

4. Verfahren nach einem der vorhergehenden Ansprüche, wobei eine Interaktionskomponente (17) eine auf einen für den Direktbedienmodus vorgesehenen Aufenthaltsbereich des Benutzers (23) ausgerichtete Kamera und die korrespondierende Ersatzkomponente (27) eine Kamera des Handgeräts (25) ist und die von der Übertragungssoftware (28) des Handgeräts (25) bereitgestellten Bilddaten (32) einer in dem Bediengerät betriebenen Erkennungsapplikation an die Gestenerkennung und/oder Benutzererkennung und/oder Videotelefonie übergeben werden.

5. Verfahren nach Anspruch 4, wobei das Handgerät seine räumliche Orientierung mittels zumindest eines eingebauten Sensors erkennt und seine erkannte Orientierung über die Kommunikationsschnittstelle an das Benutzergerät signalisiert und das Benutzergerät eine Orientierung eines aus dem Handgerät empfangenen Videostroms für die Gestenerkennung und/oder Benutzererkennung und/oder Videotelefonie in Abhängigkeit von der signalisierten Orientierung aus dem Handgerät während der Laufzeit ändert.

6. Verfahren nach einem der vorhergehenden Ansprüche, wobei durch die Prozessorschaltung (12) mittels eines Hypervisors (13) zumindest zwei virtuelle Maschinen mit betrieben werden und eine der virtuellen Maschinen als Systempartition (15) die Kommunikationsschnittstelle (30) betreibt und mit der Übertragungssoftware (28) des Handgeräts (25) die Rohdaten austauscht und zumindest eine andere der virtuellen Maschinen die zumindest eine Softwareapplikation (34) betreibt und dabei die Rohdaten nur indirekt über die Systempartition (15) mit der Kommunikationsschnittstelle (30) austauscht.

7. System umfassend ein Benutzergerät (11) mit einer Prozessorschaltung und ein Handgerät (25) mit einer Übertragungssoftware (28), welche dazu eingerichtet sind, ein Verfahren nach einem der vorhergehenden Ansprüche durchzuführen.

8. Benutzergerät (11) für ein System nach Anspruch 7, wobei das Benutzergerät (11) zumindest eine festverbauten Interaktionskomponente (17) für Benutzerinteraktionen mit einem Benutzer (23) aufweist und eine Prozessorschaltung (12) des Benutzergeräts (11) dazu eingerichtet ist, dass in einem Direktbedienmodus des Benutzergeräts (11) die Benutzerinterkationen umfassen, dass durch eine Prozessorschaltung (12) graphische Bedienoberflächen (35, 52, 53) zumindest einer Softwareapplikation (34) zu einer graphischen Nutzerschnittstelle, GUI, kombiniert und als finale graphische Rohdaten der GUI an eine Interaktionskomponente (17) zur Darstellung ausgegeben werden und/oder dass erfasste Rohdaten (29) einer berührungslosen Benutzereingabe (24) aus einer Interaktionskomponente (17) empfangen und durch die Prozessorschaltung (12) zu einer Gestenerkennung und/oder Benutzererkennung und/oder Videotelefonie übertragen werden, **dadurch gekennzeichnet, dass**
die Prozessorschaltung (12) des Benutzergeräts (11) dazu eingerichtet ist, dass das Benutzergerät (11) eine Kommunikationsschnittstelle (30) für einen Datenaustausch mit einem portablen Handgerät (25) des Benutzers (23) zu betreiben, welches jeweils zumindest eine der jeweiligen Interaktionskomponente (17) zugeordnete Ersatzkomponente (27) aufweist, und das Benutzergerät (11) einen Fernbedienmodus des Benutzergeräts (11) vorsieht, in welchem die Prozessorschaltung (12) des Benutzergeräts (11) mit einer Übertragungssoftware (28) des Handgeräts (25) die Rohdaten über die Kommunikationsschnittstelle (30) austauscht und hierbei die das Benutzergerät (11) betreffenden Schritte gemäß einem Verfahren nach einem der Ansprüche 1 bis 6 ausführt.

9. Benutzergerät (11) nach Anspruch 8, wobei das Benutzergerät (11) als eine Bedienkonsole eines Kraftfahrzeugs (10) ausgestaltet ist.

10. Kraftfahrzeug (10) mit einem Benutzergerät (11) nach Anspruch 8 oder 9.

11. Übertragungssoftware (28) für ein portables Handgerät (25) eines Benutzers (23), wobei die Übertragungssoftware (28) maschinenlesbare Instruktionen umfasst, die dazu eingerichtet sind, bei Ausführen durch eine Prozessorschalung des Handgeräts (25) die das Handgerät (25) betreffenden Schritte gemäß einem Verfahren nach einem der Ansprüche 1 bis 6 auszuführen.

## Claims

1. A method for operating a non-portable user device (11) with at least one permanently installed interaction component (17) for user interactions with a user (23), wherein in a direct operating mode of the user device (11), user interactions include that a processor circuit (12) combines a respective graphic operator interface (35, 52, 53) of at least one software application (34) into a graphic user interface, GUI (22), and final graphic raw data of the GUI (22) is output for representation to an interaction component (17), and/or that detected raw data (29) of a contactless user input (24) is received from an interaction component (17) and transmitted by the processor circuit (12) to gesture recognition and/or user recognition and/or video telephony,
**characterized in that** the user device (11) operates a communication interface (30) for data exchange with a portable handheld device (25) of the user (23), which has at least one replacement component (27) associated with the respective interaction component (17), and
in a remote control mode of the user device (11), transmission software (28) of the handheld device (25), on the one hand, and the processor circuit (12) of the user device (11), on the other hand, exchange the raw data via the communication interface (30), and the transmission software (28) of the handheld device (25) forwards the raw data between the communication interface (30) and the respective replacement component (27).

2. The method according to claim 1, wherein an interaction component (17) is a display of the user device (11) and the associated replacement component (27) is a display of the handheld device (25), and the final rendered graphic user interface, GUI, is sent to the transmission software (28) via the communication interface (30) as the graphic raw data.

3. The method according to claim 2, wherein the handheld device recognises its spatial orientation by means of at least one installed sensor, and signals its orientation via the communication interface to the user device, and the user device adapts an orientation of the image output of the GUI depending on the signalled orientation from the handheld device at runtime.

4. The method according to any of the preceding claims, wherein an interaction component (17) is a camera provided for direct operating mode and aligned with a location area of the user (23), and the corresponding replacement component (27) is a camera of the handheld device (25), and the image data (32) provided by the transmission software (28) of the handheld device (25) from a recognition application operating in the user device is transferred to gesture recognition and/or user recognition and/or video telephony.

5. The method according to claim 4, wherein the handheld device recognises its spatial orientation by means of at least one installed sensor, and signals its recognised orientation to the user device via the communication interface, and the user device changes an orientation of a video stream received from the handheld device for gesture recognition and/or user recognition and/or video telephony depending on the signalled orientation from the handheld device at runtime.

6. The method according to any of the preceding claims, wherein by means of a hypervisor (13), the processor circuit (12) also operates at least two virtual machines, and one of the virtual machines operates the communication interface as a system partition (15), and exchanges raw data with the transmission software (28) of the handheld device (25), and at least another one of the virtual machines operates the at least one software application (34) while exchanging raw data with the communication interface (30) indirectly only via the system partition (15).

7. A system, comprising a user device (11) with a processor circuit, and a handheld device (25) with transmission software (28), which are configured to execute a method according to any of the preceding claims.

8. A user device (11) for a system according to claim 7, wherein the user device (11) has at least one permanently installed interaction component (17) for user interactions with a user (23), and a processor circuit (12) of the user device (11) is configured so that in a direct operating mode of the use device (11) the user interactions comprise that a processor circuit (12) combines graphic operator interfaces (35, 52, 53) of at least one software application (34) into a graphic user interface, GUI, and outputs an interaction component (17) for representation as the final graphic raw data of the GUI, and/or that detected raw data (29) of a contactless user input (24) from an interaction component (17) is received and transmitted by the processor circuit (12) to gesture recognition and/or user recognition and/or video telephony,
**characterised in that** the processor circuit (12) of the user device (11) is configured for the user device (11) to operate a communication interface (30) for data exchange with a portable handheld device (25) of the user (23), respectively having at least one replacement component (27) associated with the respective interaction component (17), and the user device (11) provides a remote control mode for the user device (11) in which the processor circuit (12) of the user device (11) exchanges the raw data with transmission software (28) of the handheld device (25) via the communication interface (30) while executing the steps regarding the user device (11) according to a method according to any of claims 1 to 6.

9. The user device (11) according to claim 8, wherein the user device (11) is embodied as an operating panel of an automotive vehicle (10).

10. An automotive vehicle (10) with a user device (11) according to claim 8 or 9.

11. Transmission software (28) for a portable handheld device (25) of a user (23), wherein the transmission software (28) includes machine-readable instructions which are configured to execute the steps regarding the handheld device (25) according to the method according to any according to claims 1 to 6 when they are run by a processor circuit of the handheld device (25).

## Revendications

1. Procédé permettant de faire fonctionner un dispositif utilisateur (11) non portatif, comprenant au moins un composant d'interaction (17) installé à demeure pour des interactions utilisateur avec un utilisateur (23), dans lequel, dans un mode de commande direct du dispositif utilisateur (11), les interactions utilisateur comprennent le fait qu'un circuit de processeur (12) combine une interface de commande graphique (35, 52, 53) respective d'au moins une application logicielle (34) en une interface utilisateur graphique, GUI (22), et que des données brutes finales de la GUI (22) soient émises à un composant d'interaction (17) pour être représentées, et/ou que des données brutes détectées (29) d'une entrée utilisateur sans contact (24) provenant d'un composant d'interaction (17) soient reçues et transmises par le circuit de processeur (12) à une reconnaissance de geste et/ou à une reconnaissance d'utilisateur et/ou à la vidéotéléphonie,
**caractérisé en ce que** le dispositif utilisateur (11) fait fonctionner une interface de communication (30) pour un échange de données avec un appareil à main portatif (25) de l'utilisateur (23) qui présente au moins un composant de remplacement (27) associé au composant d'interaction (17) respectif, et
dans un mode télécommandé du dispositif utilisateur (11), un logiciel de transmission (28) de l'appareil à main (25) d'une part et le circuit de processeur (12) du dispositif utilisateur (11) d'autre part échangent les données brutes par l'intermédiaire de l'interface de communication (30), et le logiciel de transmission (28) de l'appareil à main (25) retransmet les données brutes entre l'interface de communication (30) et le composant de remplacement (27) respectif.

2. Procédé selon la revendication 1, dans lequel un composant d'interaction (17) est un écran du dispositif utilisateur (11), et le composant de remplacement (27) associé est un écran de l'appareil à main (25), et comme données brutes graphiques, l'interface utilisateur graphique, GUI, complètement rendue est envoyée au logiciel de transmission (28) par l'intermédiaire de l'interface de communication (30).

3. Procédé selon la revendication 2, dans lequel l'appareil à main reconnaît son orientation spatiale au moyen d'au moins un capteur intégré, et signale son orientation au dispositif utilisateur par l'intermédiaire de l'interface de communication, et le dispositif utilisateur adapte une orientation de la sortie d'image de la GUI en fonction de l'orientation signalée provenant de l'appareil à main en cours d'exécution.

4. Procédé selon l'une quelconque des revendications précédentes, dans lequel un composant d'interaction (17) est une caméra alignée sur une zone de séjour de l'utilisateur (23) prévue pour le mode de commande direct, et le composant de remplacement (27) correspondant est une caméra de l'appareil à main (25), et les données d'image (32) fournies par le logiciel de transmission (28) de l'appareil à main (32) provenant d'une application de reconnaissance fonctionnant sur l'appareil de commande sont transférées à la reconnaissance de gestes et/ou à la reconnaissance d'utilisateur et/ou à la vidéotéléphonie.

5. Procédé selon la revendication 4, dans lequel l'appareil à main reconnaît son orientation spatiale au moyen d'au moins un capteur installé, et signale son orientation reconnue au dispositif utilisateur par l'intermédiaire de l'interface de communication, et le dispositif utilisateur change une orientation d'un flux vidéo reçu de l'appareil à main pour la reconnaissance de geste et/ou la reconnaissance d'utilisateur et/ou la vidéotéléphonie en fonction de l'orientation signalée provenant de l'appareil à main en cours d'exécution.

6. Procédé selon l'une quelconque des revendications précédentes, dans lequel le circuit de processeur (12) fait aussi fonctionner au moins deux machines virtuelles au moyen d'un hyperviseur (13), et l'une des machines virtuelles fait fonctionner l'interface de communication (30) en tant que partition système (15) et échange les données brutes avec le logiciel de transmission (28) de l'appareil à main (25), et au moins une autre des machines virtuelles fait fonctionner ladite au moins une application logicielle (34) tout en échangeant les données brutes seulement indirectement avec l'interface de communication (30) par l'intermédiaire de la partition système (15).

7. Système, comprenant un dispositif utilisateur (11) comprenant un circuit de processeur et un appareil à main (25) pourvu d'un logiciel de transmission (28), qui sont aménagés pour exécuter un procédé selon l'une quelconque des revendications précédentes.

8. Dispositif utilisateur (11) pour un système selon la revendication 7, dans lequel le dispositif utilisateur (11) présente au moins un composant d'interaction (17) installé à demeure pour des interactions d'utilisateur avec un utilisateur (23), et un circuit de processeur (12) du dispositif utilisateur (11) est aménagé pour que dans un mode d'utilisation direct du dispositif utilisateur (11), les interactions d'utilisateur comprennent le fait qu'un circuit de processeur (12) combine des interfaces de commande graphiques (35, 52, 53) d'au moins une application logicielle (34) en une interface utilisateur graphique, GUI, et les émette en tant que données brutes finales de la GUI à un composant d'interaction (17) pour être représentées, et/ou que des données brutes détectées (29) d'une entrée utilisateur (24) sans contact soient reçues d'un composant d'interaction (17) et transmises par le circuit de processeur (12) pour une reconnaissance de gestes et/ou une reconnaissance d'utilisateur ou la vidéotéléphonie,
**caractérisé en ce que** le circuit de processeur (12) du dispositif utilisateur (11) est aménagé pour que le dispositif utilisateur (11) fasse fonctionner une interface de communication (30) pour un échange de données avec un appareil à main portatif (25) de l'utilisateur (23) qui présente respectivement au moins un composant de remplacement (27) associé au composant d'interaction (17), et le dispositif utilisateur (11) prévoit un mode télécommandé du dispositif utilisateur (11) dans lequel le circuit de processeur (12) du dispositif utilisateur (11) échange avec un logiciel de transmission (28) de l'appareil à main (25) les données brutes par l'intermédiaire de l'interface de communication (30), tout en exécutant les étapes concernant le dispositif utilisateur (11) selon un procédé selon l'une quelconque des revendications 1 à 6.

9. Dispositif utilisateur (11) selon la revendication 8, dans lequel le dispositif utilisateur (11) est configuré comme un panneau de contrôle d'un véhicule automobile (10).

10. Véhicule automobile (10), comprenant un dispositif utilisateur (11) selon la revendication 8 ou 9.

11. Logiciel de transmission (28) pour un appareil à main portatif (25) d'un utilisateur (23), dans lequel le logiciel de transmission (28) comprend des instructions lisibles par machine qui sont conçues pour effectuer les étapes concernant l'appareil à main (25) selon un procédé selon l'une quelconque des revendications 1 à 6 lorsqu'elles sont exécutées par un circuit de processeur de l'appareil à main (25).
